Europäisches Patentamt

European Patent Office

Office européen des brevets

(19)

(11) Numéro de publication : **0 014 619**
**B1**

(12) **FASCICULE DE BREVET EUROPÉEN**

(45) Date de publication du fascicule du brevet :
03.08.83

(21) Numéro de dépôt : **80400101.4**

(22) Date de dépôt : **22.01.80**

(51) Int. Cl.³ : **G 01 S 13/68**, G 01 S 13/44,
G 01 S 7/34

(54) **Dispositif de filtrage dynamique non linéaire du bruit de mesure angulaire dans un radar, et système radar le comportant.**

(30) Priorité : **13.02.79 FR 7903640**

(43) Date de publication de la demande :
**20.08.80 Bulletin 80/17**

(45) Mention de la délivrance du brevet :
**03.08.83 Bulletin 83/31**

(84) Etats contractants désignés :
**BE CH DE GB IT NL SE**

(56) Documents cités :
FR A 2 396 311
US A 3 599 208
US A 3 890 617
US A 3 952 304

IEE INTERNATIONAL CONFERENCE ON RADAR
PRESENT AND FUTURE, 23-25 octobre 1973, IEE
Conference publication no. 105, Londres GB TH.
KRONHAMM : « An application of Kalkman filtering to target tracking », pages 360-365

PROCEEDINGS OF THE IEEE 1978 NATIONAL
AEROSPACE AND ELECTRONICS CONFERENCE
(NAECON 77), DAYTON, 16-18 mai 1978, vol. 1
New York US H.L. JONES et al. : « Comparisons
of high anti-jam design techniques for GPS receivers », pages 39-46

(73) Titulaire : **THOMSON-CSF**
**173, Boulevard Haussmann**
**F-75379 Paris Cedex 08 (FR)**

(72) Inventeur : **Carre, Roland**
**"THOMSON-CSF" - SCPI 173, bld Haussmann**
**F-75360 Paris Cedex 08 (FR)**
Inventeur : **Doriath, Georges**
**"THOMSON-CSF" - SCPI 173, bld Haussmann**
**F-75360 Paris Cedex 08 (FR)**

(74) Mandataire : **Benoit, Monique et al**
**THOMSON-CSF SCPI 173, Bld Haussmann**
**F-75379 Paris Cedex 08 (FR)**

Jouve, 18, rue St-Denis, 75001 Paris, France

Dispositif de filtrage dynamique non linéaire du bruit de mesure angulaire dans un radar, et système radar le comportant

La présente invention concerne un dispositif de filtrage dynamique non linéaire de bruit de mesure de la position angulaire d'une cible dans un radar. Elle s'applique également à des systèmes radar et sonar comportant un tel dispositif.

Les procédés de mesures angulaires de la position d'une cible par un Radar encore appelés mesure d'« écartométrie » ou procédé « monopulse » sont basés sur la comparaison de deux ou plusieurs diagrammes d'antenne différents pointés sur la même cible. Il peut y avoir une ou plusieurs mesures, par exemple en site et en gisement.

Les mesures angulaires sont calculées à partir de l'amplitude d'un signal électrique qui est représentative de la mesure. Les mesures angulaires sont affectées de bruit notamment d'un bruit de scintillation provenant d'une part des mouvements de la cible par rapport au Radar et de la géométrie de la cible d'autre part. Ce bruit limite les performances des systèmes Radar et notamment des systèmes de poursuite automatique.

Un système radar comportant des moyens de mesure angulaire ou d'écart angulaire présente au moins deux diagrammes d'antenne à la réception. Ils sont exploités dans au moins deux voies de réception désignées couramment par la voie « somme » délivrant un signal « somme » $\sum$ et la voie « différence » délivrant un signal « différence » $\Delta$ (ou 2 signaux $\Delta S$ et $\Delta G$ si les mesures sont faites en site et en gisement par exemple). Les moyens de calcul des mesures angulaires effectuent généralement le quotient des signaux $\Delta$ et $\sum$. Le quotient noté $\varepsilon$ est une mesure de l'angle de dépointage de la cible détectée, par rapport à l'axe des deux diagrammes d'antenne.

Le filtrage des bruits de mesure angulaire peut être réalisé au moyen de simples filtres linéaires ou non linéaires.

Le filtrage linéaire a l'inconvénient d'introduire, dans le cas du filtrage des écartométries radars, des retards importants sur les mesures. Ces retards sont alors cause d'erreurs dynamiques sur la mesure de la position relative de la, ou des cibles détectées.

Le filtrage non linéaire a apporté des améliorations qui dans certains cas se sont avérées insuffisantes.

Le brevet américain US 3 952 304 de Broniwitz et al. décrit un système de poursuite utilisant un filtre de Kalman pour sélectionner les mesures d'écartométrie radar. L'estimation de la variance des mesures successives effectuées permet d'effectuer une pondération entre l'estimée antérieure et la nouvelle mesure et de calculer les gains du filtre. Un filtre de Kalman suppose la présence de bruit gaussien superposé au signal à filtrer. Or le bruit apporté par le phénomène de fluctuation des cibles n'est pas un bruit gaussien. Un filtre de Kalman authentique tel que décrit dans le présent brevet américain ne peut donc permettre le filtrage efficace de mesures angulaires affectées de bruit non gaussien.

Un dispositif de filtrage non linéaire a fait l'objet du brevet français n° 2 396 311 déposé au nom de la demanderesse et utilise les liens dits de corrélation existant entre la qualité de la mesure du signal d'écart $\varepsilon$ donnant les erreurs sur la mesure angulaire en fonction du temps et les signaux $\varepsilon$ et $\varepsilon q$, $\varepsilon q$ étant la composante en quadrature avec le signal $\varepsilon$. Cependant le taux résiduel de bruit de mesure angulaire et le retard de la mesure restent non négligeables. Il en résulte donc une efficacité réduite de ces filtres dans les systèmes de poursuite automatique lorsque l'on est en présence de cibles à évolution rapide, la géométrie de la cible pouvant varier rapidement compte tenu du mouvement de cette dernière.

La présente invention vise à résoudre ces problèmes conformément aux caractéristiques techniques de la revendication 1.

Un avantage de la présente invention réside dans le taux de bruit particulièrement faible des mesures d'écartométrie, inférieur aux taux d'autres sources de bruit, et dans la possibilité de disposer d'une estimation de la dérivée de la mesure permettant ainsi de compenser tous les retards additionnels du système Radar dans un calculateur extérieur auxiliaire qui ne sera pas décrit comme faisant partie de la présente invention et calculant la position vraie instantanée de la cible par un calcul au premier ordre.

D'autres avantages et caractéristiques de la présente invention ressortiront de la description qui suit donnée à l'aide des figures qui représentent :

la figure 1, un exemple de réalisation d'un système de mesure d'écartométrie Radar utilisant un filtre linéaire,

la figure 2, un exemple de réalisation d'un système de mesure d'écartométrie Radar délivrant les signaux $\sum$, $\varepsilon$ et $\varepsilon q$,

la figure 3, un exemple de calcul du lien entre les voies $\sum$ et $\varepsilon q$ et son application à la sélection des mesures d'écartométrie $\varepsilon$ par le calcul de la fonction du poids statistique P(t) des mesures d'écartométrie,

la figure 4 un exemple de filtre dynamique non linéaire du second ordre adapté à l'invention,

la figure 5, un bloc diagramme des circuits de calcul de la fonction P(t), l'élaboration du signal de commande de gain K(t) et son application à un filtre non linéaire du second ordre selon la figure 4 dans un système de mesure d'écartométrie Radar,

la figure 6, un bloc diagramme d'une réalisation détaillée de l'invention par un filtre du second ordre dans l'exemple de la figure 5,

la figure 7, un exemple de système Radar de poursuite utilisant la présente invention,

la figure 8, un exemple de système Radar multifréquence utilisant la présente invention.

Un radar qui effectue une mesure d'écartométrie, c'est-à-dire une mesure angulaire donnant l'angle de dépointage entre l'axe de son antenne et la direction d'une cible, possède deux diagrammes d'antenne à la réception. Ces deux diagrammes sont produits par une antenne du type monopulse par exemple. Le récepteur comporte alors deux voies de réception, désignées couramment, l'une par voie somme, délivrant un signal $\Sigma$ et l'autre par voie différence, délivrant un signal différence $\Delta$. Les deux voies de réception sont connectées à des moyens d'élaboration des mesures angulaires, lesquelles mesures sont exploitées dans le reste du système d'une manière appropriée. Le cas d'un radar ne délivrant qu'une seule mesure d'écartométrie est pris comme exemple pour simplifier.

Naturellement l'invention s'applique aussi aux radars effectuant plusieurs mesures angulaires.

Le calcul de la mesure de l'écart angulaire effectue le quotient des signaux $\Delta$ et $\Sigma$. En fait pour obtenir le signe de l'angle de dépointage, les moyens de mesure effectuent l'opération suivante :

$$\varepsilon = |\Delta|/|\Sigma| \cos (\varphi_\Sigma - \varphi_\Delta) \text{ (relation 1)}$$

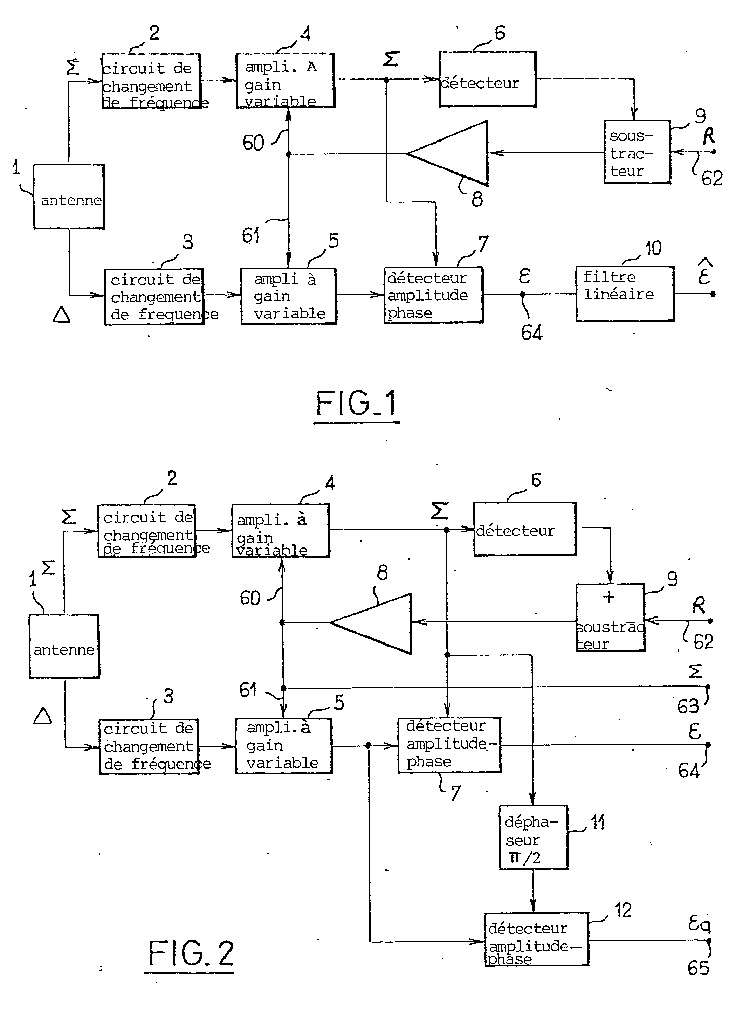

où $\varepsilon$ est la mesure de l'écart angulaire avec son signe
$|\Delta|$ est le module du signal différence
$|\Sigma|$ est le module du signal somme
$\varphi_\Sigma$ et $\varphi_\Delta$ sont les phases respectives des signaux somme $\Sigma$ et différence $\Delta$. Cette opération peut être réalisée de plusieurs façons connues. Un exemple type est représenté sur la figure 1.

Sur la figure 1 une antenne 1, du type monopulse par exemple délivre des signaux représentatifs de deux diagrammes de rayonnement sur les voies somme $\Sigma$ et différence $\Delta$. Des circuits de changement de fréquence 2 et 3 appliquent les signaux $\Sigma$ et $\Delta$ à deux amplificateurs à gain variable 4 et 5, ayant des entrées de commande de gain 60 et 61 respectivement. Les gains des amplificateurs sont commandés par une boucle de commande automatique de gain à partir du signal somme $\Sigma$. Cette boucle comprend de la sortie de l'amplificateur 4 à l'entrée de la commande de gain 60, un circuit détecteur 6, un soustracteur 9 recevant un signal de référence R depuis une borne 62, et un amplificateur de boucle 8. Le signal de mesure de l'écart angulaire $\varepsilon$ est obtenu à la sortie d'un détecteur amplitude-phase 7 alimenté par les amplificateurs 4 et 5 et est disponible à une borne 64. Dans un filtrage classique un filtre linéaire 10 est connecté à cette borne 64 et délivre la mesure d'écartométrie filtrée, avec les inconvénients de bruit résiduel non négligeable et de retard de mesure faussant la détermination de la position de la cible mobile à l'instant de mesure.

Pour remédier à ces inconvénients l'art antérieur utilise une voie de sortie supplémentaire délivrant un signal $\varepsilon q$ en quadrature avec $\varepsilon$. Un exemple de génération de ce signal $\varepsilon q$ est représenté sur la figure 2 qui, outre les éléments décrits dans la figure 1, comporte un déphaseur 11 de $\pi/2$ dont l'entrée est connectée à la sortie de l'amplificateur limiteur 4 et la sortie à un détecteur amplitude phase 12 recevant d'autre part la sortie de l'amplificateur limiteur 5. Ce détecteur amplitude phase 12 délivre sur une borne 65 le signal $\varepsilon q$. D'autre part le signal somme $\Sigma$ est disponible sur une borne 63 connectée à la sortie de l'amplificateur de boucle 8.

La mesure effectuée serait parfaite si la cible détectée par le radar était ponctuelle.

En réalité plusieurs points de la cible réfléchissent les ondes en direction du radar. Ces points situés à des distances différentes produisent des échos qui se superposent dans la cellule de résolution du radar avec des déphasages relatifs provenant des différences de distance. Ce phénomène est la cause d'erreurs dans la mesure de l'écart angulaire $\varepsilon$. Ces erreurs sont fluctuantes à cause des mouvements de la cible. Ce phénomène appelé couramment scintillation est connu sous l'appellation anglosaxonne de « glint ».

En fait, une cible complexe telle qu'un avion ou un missile, par exemple, peut être assimilée à quelques points principaux réfléchissants prépondérants, auxquels se superposent des réflexions diffusées à bas niveau. L'étude des fluctuations d'amplitude du signal somme $\Sigma$ a permis de montrer que les erreurs de mesure angulaire sont en relation étroite avec ces fluctuations. De même l'étude des fluctuations du signal $\varepsilon q$ d'écartométrie en quadrature a montré que les erreurs de mesure sont aussi liées à ces fluctuations.

Le signal $\varepsilon q$ est obtenu par l'opération

$$\varepsilon q = |\Delta|/|\Sigma| \sin (\varphi_\Sigma - \varphi_\Delta) \text{ (relation 2)}$$

et il ne contient pas la mesure du dépointage de la cible. Sa valeur efficace est liée à l'envergure angulaire de la cible.

Le dispositif suivant l'invention met à profit les liens de corrélation apparaissant pendant les fluctuations des signaux $\Sigma$ et $\varepsilon q$ pour en déduire la fonction de pondération P(t) de la mesure et ainsi amplifier les bonnes mesures et d'annuler les autres. La logique de sélection des mesures d'écart angulaire $\varepsilon$ est basée sur les principes suivants :

— les mesures ont une forte probabilité d'être significatives lorsque l'amplitude de $\Sigma$ passe par un maximum local.

— les mesures ont une forte probabilité d'être non significatives lorsque l'amplitude de $\Sigma$ passe par

3

**0 014 619**

un minimum local.

— les mesures sont soit très bonnes, soit très mauvaises au voisinage d'un passage par zéro du signal $\varepsilon q$.

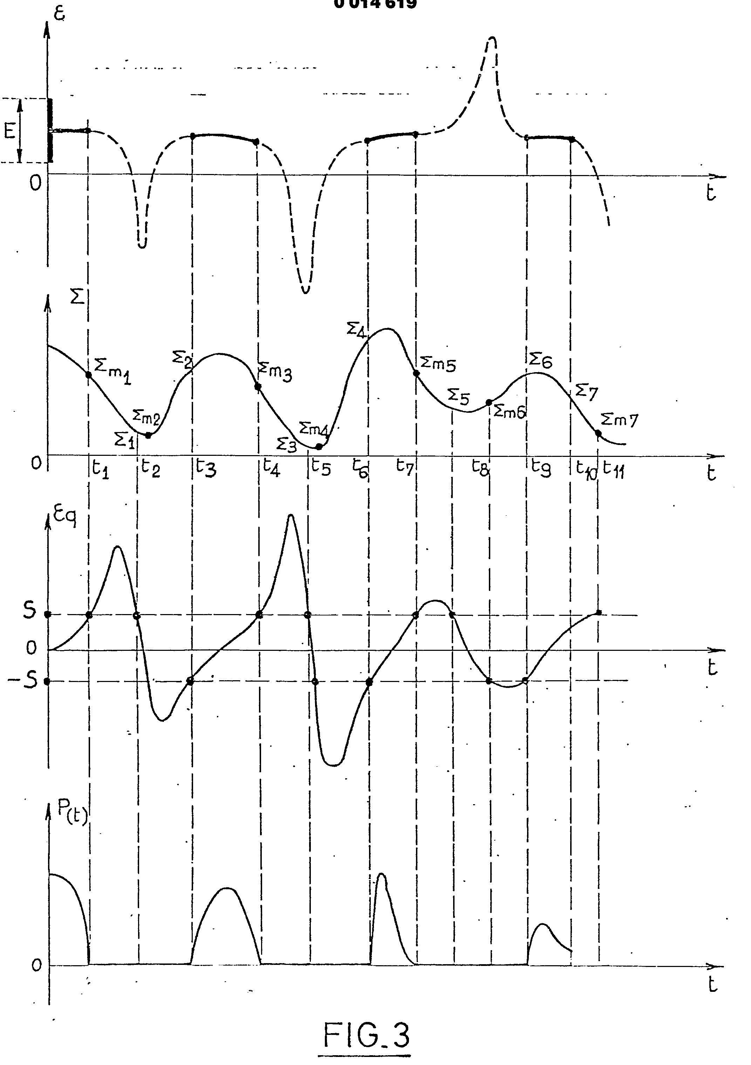

La figure 3 représente un exemple des signaux, $\sum$, $\varepsilon$, $\varepsilon q$ et $P(t)$ en fonction du temps pour une cible donnée ayant une certaine envergure en supposant l'antenne légèrement dépointée par rapport à la cible. Les mesures correctes de l'écart angulaire $\varepsilon$ doivent donc être comprises entre les limites de la zone de largeur E représentative de l'envergure de la cible. La courbe $\sum$ représente l'amplitude des signaux détectés dans la voie somme. La courbe $\varepsilon$ représente les mesures angulaires d'écartométrie obtenues, la courbe $\varepsilon q$ représente ce que donne la voie supplémentaire « écartométrie en quadrature », et la courbe $P(t)$ la fonction de pondération choisie en tenant compte des liens de corrélation décrits plus haut et obtenue par la relation calculée en faisant :

$$P(t) = C \cdot \sum^n \cdot (S - |\varepsilon q|) \quad \text{si } |\varepsilon q| < S \text{ et } P(t) = 0 \text{ si } |\varepsilon q| > S$$

dans laquelle S est une valeur de seuil prédéterminée de la fonction $\varepsilon q$, n un nombre positif qui dans le cas de la figure 3 est fixé à titre d'exemple à la valeur unité et C un coefficient de valeur 0 ou 1. Le coefficient C (de valeur constante 0 ou 1) est déterminé par la comparaison entre la dernière valeur $\sum$ mi de $\sum$ obtenue lorsque $\varepsilon q$ devient supérieur au seuil S, et celle également de $\sum$, lorsque $\varepsilon q$ redevient inférieur à S, soit $\sum_k$ cette valeur :

$$\text{si} \quad \sum_k < \sum_{mi} \quad C = 0$$

$$\text{si} \quad \sum_k > \sum_{mi} \quad C = 1$$

La nécessité de ce dernier coefficient C provient du fait que pour que la mesure de l'écart $\varepsilon$ soit bonne il faut que le signal $\sum$ soit à un maximum local, donc si $\sum_k > \sum_{mi}$ cette condition est remplie de façon certaine.

Cette fonction de pondération $P(t)$ permet alors de ne donner un poids statistique $(S - |\varepsilon q|) \cdot \sum^n$ différent de zéro que pour des intervalles de $\varepsilon$ représentant des bonnes mesures comme le montre clairement la figure 3. Sur cette figure on constate que le signal $\sum$ se trouve autour d'un maximum local et $|\varepsilon q| < S$ pour les intervalles de temps :

$$0 \text{ à } t_1, \ t_3 \text{ à } t_4, \ t_6 \text{ à } t_7, \ t_9 \text{ à } t_{11}$$

donc d'après les critères de liens de corrélation cités plus haut seul ces intervalles de temps sont susceptibles de donner de bonnes valeurs de $\varepsilon$. Pendant l'intervalle $t_9$ à $t_{11}$, pour le signal $\sum$, la valeur de ce signal $\sum$ diminue en dessous de la valeur $\sum$ m6 mise en mémoire comme étant la dernière valeur avant que $|\varepsilon q| > S$. D'après la définition de $P(t)$ la fonction de poids statistique commandant la valeur du gain des valeurs de mesure d'écart $\varepsilon$, l'intervalle $t_{10}$ à $t_{11}$ correspondant aux valeurs de $\sum$ plus petites que $\sum$m6 doit être nul. Cette restriction faite, sur la figure les valeurs de $\varepsilon$ éliminées sont représentées en pointillés et la fonction $P(t)$ présente la forme montrée. La figure montre aussi le segment E correspondant à l'écart angulaire de la cible.

La présente invention utilise cette fonction $P(t)$ pour la commande du gain de filtres non linéaires du type filtres de Kalman.

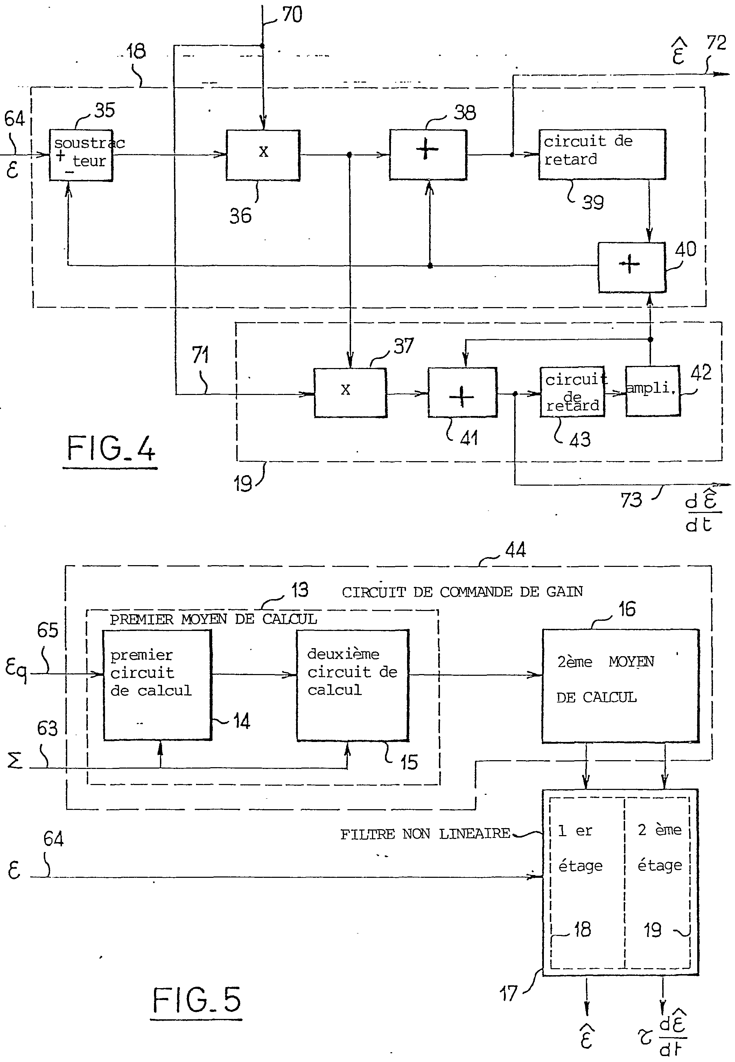

Le principe de ces filtres a fait l'objet de plusieurs publications et on ne donnera ici qu'un exemple de filtre de ce type à deux étages 18 et 19 adapté à la présente invention. Le filtre est représenté sur la figure 4.

Le 1er étage comporte un soustracteur 35 recevant d'une part la fonction $\varepsilon$ issue de la borne 64 et d'autre part la sortie d'un additionneur 40 reliée également à l'entrée d'un autre additionneur 38. La sortie du soustracteur 35 est connectée à un circuit de multiplication 36 recevant également une commande extérieure de gain 70, et délivrant à sa sortie un signal appliqué à l'entrée de l'additionneur 38 et d'un circuit de multiplication 37 du second étage 19 recevant la seconde commande de gain sur sa borne 71. La sortie de l'additionneur 38 est connectée à un circuit de retard 39 et délivre directement la mesure d'écart angulaire filtrée $\hat{\varepsilon}$. La sortie du circuit de retard 39 est connectée à l'additionneur 40 qui reçoit la sortie d'un amplificateur 42, du deuxième étage 19, la sortie de cet amplificateur étant également reliée à l'entrée d'un additionneur 41 de l'étage 19. Cet additionneur 41 reçoit la sortie du circuit de multiplication 37 et délivre à sa sortie un signal représentant l'estimée de la dérivée $\tau \, d\hat{\varepsilon}/dt$ ($\tau$ étant le retard des circuits 39 et 43) disponible sur une borne 73 et également appliqué à l'entrée d'un circuit de retard 43 dont la sortie est connectée à l'entrée de l'amplificateur 42, le circuit de multiplication 37, l'additionneur 41, le circuit de retard 43 et l'amplificateur 42 constituant le deuxième étage 19.

Si $\varepsilon(t)$ est la mesure d'écartométrie non filtrée, le premier étage 18 de ce filtre délivre la mesure filtrée $\hat{\varepsilon}(t)$ en 72 en utilisant l'équation :

$$\hat{\varepsilon}(t) = (\varepsilon(t) - A(t)) \cdot K(t) + A(t)$$

4

où K(t) est le gain appliqué à la borne 70 du multiplicateur 36 et où A(t) représente les valeurs prédites qui sont obtenues à partir des valeurs estimées à l'instant précédent $(t - \tau)$ auxquelles on ajoute une anticipation calculée avec l'estimée de la dérivée. En fait le second étage 19 délivre directement le terme d'anticipation par l'amplificateur 42. On a alors pour celui-ci le calcul suivant :

$$A(t) = \hat{\varepsilon}(t - \tau) + \tau \cdot d\hat{\varepsilon}(t - \tau)/dt$$

$d\hat{\varepsilon}/dt$ représente l'estimée de la dérivée de la mesure d'écart filtrée $\hat{\varepsilon}(t)$ délivrée sur la borne 73.

Il faut remarquer que ces formules ici ne sont valables que si K(t) est également appliqué à la borne de commande de gain 71, créant ainsi un gain $K^2(t)$ pour le second étage. Si cela n'est pas le cas la stabilité du filtre est affectée et il peut y avoir divergence du filtre. Ce point est important pour la réalisation de la présente invention.

L'invention consiste donc en utilisant les liens de corrélation observés entre les fonctions $\sum$, $\varepsilon q$, en l'élaboration de la fonction P(t) précédemment décrite et en son utilisation comme commande unique de gain pour les deux étages du filtre dynamique non linéaire. Ceci est montré dans la figure 5 qui comporte un premier moyen de calcul 13 de la fonction de pondération P(t), comprenant lui-même un premier circuit 14 recevant les signaux $\sum$ et $\varepsilon q$ et délivrant un signal $\sum^n \cdot (S - |\varepsilon q|)$, ce signal étant appliqué ainsi que le signal $\sum$ à un deuxième circuit 15 qui lui-même délivre la fonction de pondération $P(t) = C \cdot \sum^n \cdot (S - |\varepsilon q|)$. Le premier circuit 14 reçoit également les valeurs n et S prédéterminées, et le deuxième circuit 15 effectue automatiquement le choix pour C de la valeur 0 ou 1.

Un deuxième moyen de calcul 16 recevant la sortie du deuxième circuit de calcul 15 calcule à partir de la fonction P(t) le gain K(t) qui est appliquée simultanément aux deux étages 18, 19 du filtre dynamique non linéaire 17 recevant à son entrée le signal $\varepsilon$ issu de la borne 64 et délivrant à sa sortie le signal filtré $\hat{\varepsilon}$ en 72 fig. 4, et l'estimée de sa dérivée $\tau\, d\hat{\varepsilon}/dt$ en 73 fig. 4. Des études expérimentales et des calculs théoriques ont montré que pour obtenir de bons résultats de filtrage et éviter une divergence du filtre la fonction K(t) doit toujours être inférieure à 1 et que de plus le gain du second étage doit être égal à $(K(t)^m)$ avec un fonctionnement optimal pour m = 2. Si le filtre comprend plus de deux étages le gain $K_i(t)$ du ième étage du filtre doit être supérieur au gain $K_{i+1}(t)$ du i + 1eme étage du filtre. Dans l'exemple donné à la figure 4, si le gain de l'étage 18 est K(t) celui du second étage 19 est $(K(t))^2$ ce qui correspond au fonctionnement optimum.

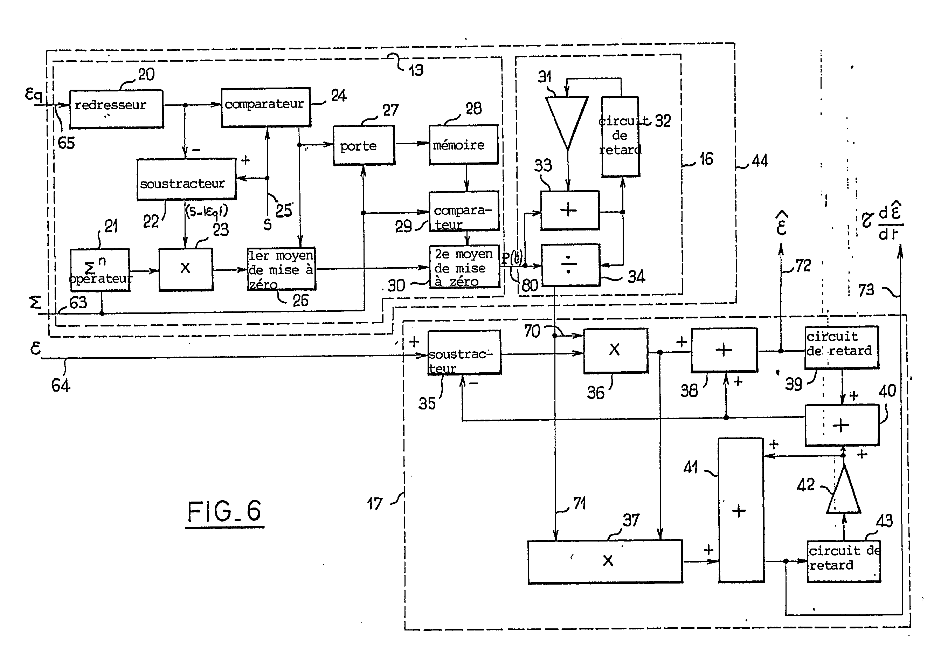

Un exemple détaillé du bloc diagramme de la figure 5 est donné à la figure 6.

Le premier moyen de calcul 13 comporte un circuit redresseur 20 recevant sur son entrée le signal $\varepsilon q$ issu de la borne 65, qui délivre à sa sortie le signal $|\varepsilon q|$ transmis à un comparateur 24 et à un soustracteur 22. Ce comparateur et ce soustracteur reçoivent par ailleurs la valeur S prédéterminée 25. Un circuit opérateur 21 reçoit le signal $\sum$ et effectue l'opération $\sum^n$, n étant prédéterminé dans ce circuit et choisi à titre d'exemple non limitatif égal aux valeurs 1 ou 2, la sortie de ce circuit 21 est reliée à un multiplicateur 23 recevant par ailleurs la sortie du soustracteur 22. La sortie du multiplicateur 23 est reliée à un diviseur 34 par l'intermédiaire de deux interrupteurs en série 26 et 30. La sortie du comparateur 24 commande l'interrupteur 26 et une porte 27 recevant le signal $\sum$, la porte 27 ayant sa sortie connectée à l'entrée d'une mémoire 28. Le signal et la sortie de la mémoire 28 sont appliqués aux entrées d'un comparateur 29 dont la sortie commande l'interrupteur 30. Le deuxième moyen de calcul 16 comporte un additionneur 33 dont une première entrée est connectée à une entrée d'un diviseur 34, et dont la sortie est connectée d'une part à une deuxième entrée du diviseur 34 et d'autre part à un circuit de retard 32. Le circuit de retard 32 est lui-même connecté à la seconde entrée de l'additionneur 33 par l'intermédiaire d'un circuit amplificateur 31, de gain inférieur à 1. La sortie du diviseur 34 est appliquée aux bornes de commande de gain 70 et 71 du filtre dynamique non linéaire 17, précédemment décrit, qui reçoit à son entrée 64 le signal $\varepsilon$ et délivre sur sa sortie 72 le signal filtré $\hat{\varepsilon}$ et sur sa sortie 73 l'estimée de sa dérivée $\tau\, d\hat{\varepsilon}/dt$.

Le principe de fonctionnement du circuit 13 est le suivant :

Le redresseur 20 délivre le signal $|\varepsilon q|$, le soustracteur 22 effectue $S - |\varepsilon q|$, le circuit opérateur 21 calcule $\sum^n$ et le circuit multiplicateur 23 délivre à sa sortie la fonction $\sum^n \cdot (S - |\varepsilon q|)$. Le comparateur 24, si $|\varepsilon q| \geqslant S$, commande l'ouverture de l'interrupteur 26, provoquant un signal nul sur la borne 80 ainsi que l'ouverture de la porte 27 permettant la mise en mémoire 28 de la valeur $\sum mi$ du signal $\sum$ au moment où $|\varepsilon q|$ est devenue supérieure à S. De plus si $|\varepsilon q| < S$, la porte 27 restant fermée, le signal $\sum$ est constamment comparé à la valeur $\sum mi$ du signal $\sum$ stocké dans la mémoire 28 lors du dernier passage de $|\varepsilon q|$ au dessus du seuil S. Si la valeur de la mémoire est supérieure à celle instantanée $\sum_k$ de la fonction $\sum$ un signal est délivré par le comparateur 29 provoquant l'ouverture de l'interrupteur 30 et donc la mise à zéro du signal sur la borne 80. On dispose ainsi sur cette borne 80 de la fonction P(t) précédemment décrite.

Cette fonction P(t) de pondération disponible sur la borne 80 est appliquée au deuxième moyen de calcul 16 constitué par un filtre récursif intégrateur à gain $G_1 (G_1 < 1)$ fixe. La constante de temps obtenue est :

$$\tau_1 = \tau G_1/1 - G_1$$

**0 014 619**

où $\tau$ est le retard donné par le circuit 32 prévu à cet effet. Ce temps $\tau_1$ va régler la bande passante moyenne du filtre dynamique non linéaire 17, cette bande passante sera donc fonction de la largeur du spectre des mesures vraies.

La fonction K(t) est obtenue en faisant le quotient entre l'entrée et la sortie du deuxième moyen de calcul 16. En présence d'une mauvaise mesure, P(t) = 0 et le filtre 17 fonctionne en mémoire. En présence d'une bonne mesure, P(t) > 0, la fonction K(t) est dépendante de la qualité P(t) de cette mesure, et de la qualité des mesures antérieures dans les limites temporelles imposées par la constante de temps $\tau_1$ du filtre 16, par exemple si pendant une période supérieure à $3\tau_1$ aucune mesure n'a été retenue (P(t) = 0), à l'arrivée d'une bonne mesure, la fonction K(t) prend une valeur proche de 1. Si cette bonne mesure succède à d'autres bonnes mesures (P(t) > 0), la fonction K(t) prend une valeur intermédiaire, 0 < K < 1, fonction de la qualité des mesures antérieures comprises entre l'instant t de mesure et l'instant $t - 3\tau_1$.

Les mesures expérimentales ont montré que la fonction P(t) devrait s'annuler entre 30 % et 50 % du temps pour obtenir un bon compromis entre la nécessité de compenser rapidement le retard accumulé au début de la charge du filtre et la nécessité de limiter l'amplitude de suroscillation.

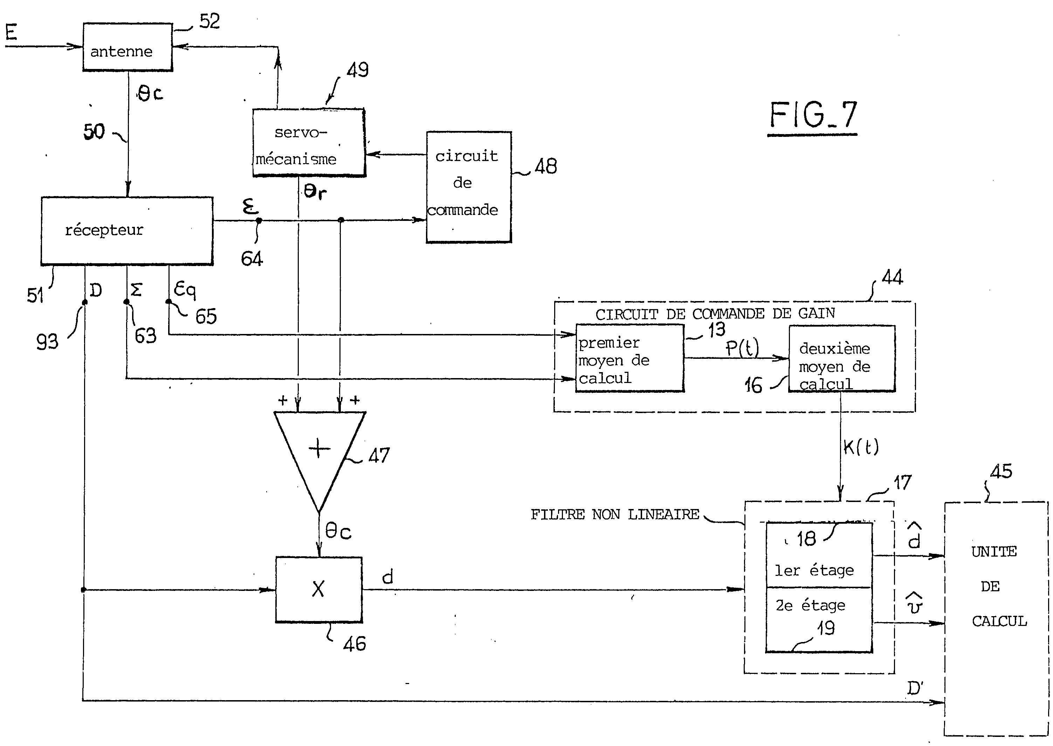

Un exemple d'utilisation de la présente invention est montré sur la figure 7 qui représente le diagramme général d'un équipement radar plus particulièrement utilisé dans la poursuite automatique de cibles mobiles.

Il comporte un circuit récepteur 51 recevant les signaux d'une antenne 52 et délivrant sur quatre voies de sorties les signaux $\varepsilon$, $\varepsilon q$, $\sum$ et D (distance) correspondant respectivement aux bornes 64, 65, 63 et 93. Un circuit de commande d'orientation de l'antenne 48 réalisant la fonction de transfert-H(p) = 1 + 1/p$\tau a$ où $\tau a$ est une constante de temps prédéterminée dans ce circuit, reçoit sur son entrée le signal d'écart $\varepsilon$ issu de la borne 64 et est connecté à sa sortie à un circuit de servomécanisme 49 commandant l'orientation de l'antenne 52. Le signal d'écart $\varepsilon$ issu de la borne 64, et la mesure de l'angle d'orientation OR issue du circuit 49 sont appliqués à un additionneur 47. Cet additionneur 47 est connecté à sa sortie à un circuit de multiplication 46 recevant sur son autre entrée le signal D de mesure de distance de la cible, issue de la borne 93, qui est également connectée à une unité de calcul 45. La sortie de ce circuit de multiplication 46 est reliée au filtre dynamique non linéaire du second ordre 17. Le circuit 44 de commande de gain comprend un premier moyen de calcul 13 de la fonction de pondération P(t) à partir des signaux $\varepsilon q$ et $\sum$ issus respectivement des bornes 65 et 63, et un deuxième moyen de calcul 16 du gain K(t) à partir de la fonction de pondération P(t) comme il a été dit en référence à la figure 6, la sortie du deuxième moyen de calcul 16 délivrant le gain K(t) à chacun des deux étages 18 et 19 du filtre dynamique non linéaire 17 et chacun de ces étages ayant sa sortie reliée à l'unité de calcul 45.

Le fonctionnement du système de la figure 7 est le suivant : à partir de la mesure d'écart (fonction d'écartométrie) $\varepsilon$ sur la borne 64 délivrée par le récepteur Radar 51, on commande le servomécanisme d'antenne pour effectuer le repointage, au travers du circuit de commande 48 qui transforme la fonction $\varepsilon$ en $\varepsilon + \varepsilon/p\tau_a$ permettant par cette opération de reconstituer l'angle $\theta_r$ de l'orientation de l'antenne. Cette mesure $\theta_r$ et celle de $\varepsilon$ sont additionnées dans le circuit 47 de façon à obtenir $\theta_c = \theta_r + \varepsilon$, $\theta_c$ étant l'angle d'orientation de la cible par rapport à un repère fixe arbitraire. Cette mesure de $\theta_c$ est multipliée dans le circuit 46 par la mesure de la distance D, issue de la borne 93, à laquelle se trouve la cible, donnant ainsi l'écart transversal d d'évolution de la cible mobile. Cette mesure d est filtrée par le filtre dynamique non linéaire 17 commandé par le circuit de calcul du gain 44 recevant du récepteur 51 les signaux $\sum$ et $\varepsilon q$. Ledit filtre délivre alors à la sortie de son premier étage 18, $\hat{d}$, mesure filtrée de l'écart transversal et à la sortie de son second étage 19, $\hat{v}$ l'estimée de la vitesse transversale de la cible dérivée de la mesure filtrée $\hat{d}$, ces deux informations étant envoyées à l'unité de calcul 45 qui peut ainsi calculer la position vraie de la cible en effectuant une correction d'erreur dynamique à partir de $\hat{v}$.

L'avantage d'un tel dispositif est de connaître l'écart transversal d avec une plus grande précision du fait de la qualité du filtrage et d'autre part l'estimée de la vitesse $\hat{v}$ permettant de compenser tout retard inhérent au système.

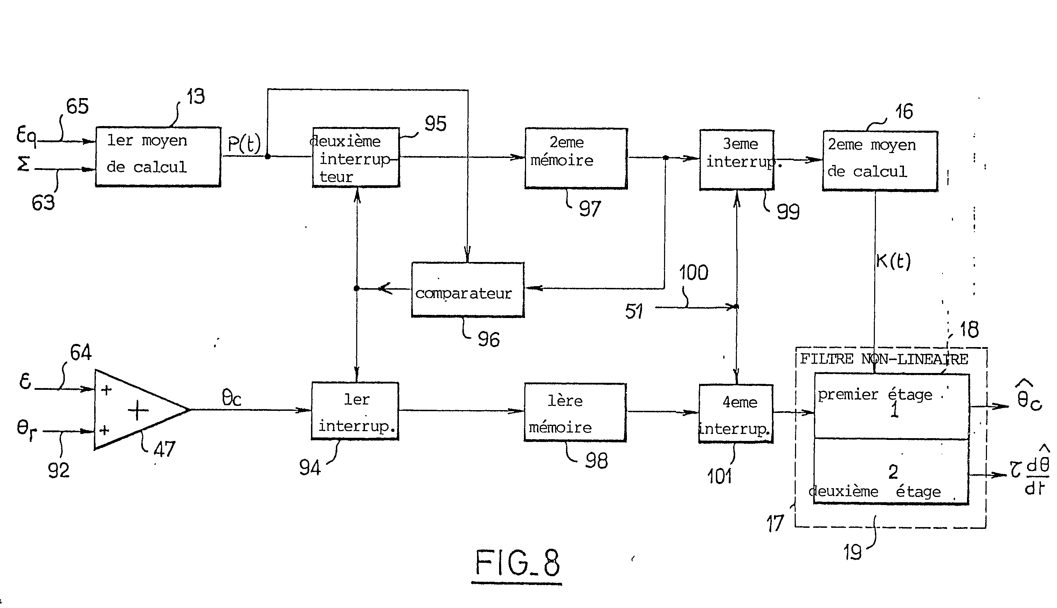

Une variante de l'exemple précédent utilisée dans les radars multifréquence est illustrée par la figure 8. Outre les éléments de la figure 7, à savoir, le premier moyen de calcul 13 délivrant la fonction de pondération P(t) et recevant sur ses deux entrées le signal $\varepsilon q$ issu de la borne 65 et le signal $\sum$ issu de la borne 63, le circuit d'addition 47 recevant sur ses deux entrées le signal $\varepsilon$ issu de la borne 64 et l'angle de pointage de l'antenne $\theta_r$ issu de la borne 92 et délivrant à sa sortie l'angle de la cible $\theta_c$ par rapport à un repère fixe, le deuxième moyen de calcul 16 délivrant le gain K(t) au filtre 17 recevant le signal $\theta_c$ le dispositif comporte quatre interrupteurs 94, 95, 99 et 101, un comparateur 96 et deux mémoires 97 et 98. L'entrée de l'interrupteur 95 est reliée à la sortie du circuit 13 délivrant P(t) et à la première entrée du comparateur 96. Le signal de sortie de ce comparateur 96 commande les deux interrupteurs 94 et 95. La sortie de l'interrupteur 94 est connectée à l'entrée de la mémoire 98 dont la sortie est reliée à l'entrée de l'interrupteur 101. La sortie de l'interrupteur 99 est reliée au circuit 16 délivrant K(t) et la sortie de l'interrupteur 101 est reliée à l'entrée du filtre non linéaire 17.

Le fonctionnement de cette variante du dispositif selon l'invention est alors le suivant : pour chaque fréquence la valeur de P(t) issue du circuit 13 est comparée à celle obtenue pour la fréquence précédente stockée dans la mémoire 97. Si la nouvelle valeur de P(t) est supérieure à l'ancienne le comparateur 96 délivre un signal fermant les interrupteurs 94 et 95, permettant ainsi de remplacer dans la mémoire 97 l'ancienne valeur de P(t) par la nouvelle, et dans la mémoire 98 l'ancienne valeur de $\theta_c$ par la nouvelle. A

6

**0 014 619**

la fin de chaque cycle de fréquence un signal 100 est délivré par les circuits de détection électromagnétique 51, commande la fermeture des interrupteurs 99 et 101 et permet ainsi le transfert de la meilleure valeur de P(t) au circuit 16 délivrant le signal K(t) et de la meilleure valeur de $\theta_c$ correspondante au filtre non linéaire 17. On pourra remarquer que tous les circuits décrits précédemment peuvent être réalisés soit en technique numérique soit en technique analogique, sans pour cela sortir du cadre de la présente invention. Dans la version numérique on admet seulement que des circuits d'échantillonnage se trouvent respectivement aux sorties 63, 64, 65 et 93 du récepteur 51.

## Revendications

1. Dispositif de filtrage dynamique non linéaire du bruit de mesure angulaire dans un radar plus particulièrement utilisé pour la poursuite de cible mobile et comportant au moins deux voies de réception issues des circuits de détection électromagnétique (51) délivrant respectivement un signal somme $\sum$ (63) et un signal $\varepsilon q$ (65) en quadrature avec le signal d'écart angulaire proprement dit $\varepsilon$ (64) élaboré à partir des signaux somme $\sum$ et différence $\Delta$ délivrés par les circuits de détection, caractérisé en ce qu'il comporte un filtre non linéaire (17) à plusieurs étages commandés en gain par un même circuit de commande (44) qui à partir des signaux $\sum$ et $\varepsilon q$ calcule le gain variable K(t) et qui comprend un premier moyen de calcul (13) recevant les signaux $\varepsilon q$ et $\sum$ respectivement issus des bornes (65 et 63) et calculant une fonction P(t) de pondération du gain K(t) définie par l'équation $P(t) = C \cdot \sum^n \cdot (S - |\varepsilon q|)$, dans laquelle n est un nombre positif prédéterminé, S une valeur de seuil prédéterminée pour le signal $\varepsilon q$ et C un coefficient égal à 1 si $|\varepsilon q|$ est inférieur au seuil S et que l'on se trouve au voisinage d'un maximum local de $\sum$ et sinon égal à 0, et un deuxième moyen de calcul (16) recevant ladite fonction de pondération P(t) et calculant le gain variable K(t) comme le quotient de la somme des valeurs, calculées antérieurement, de la fonction de pondération P(t) par la valeur calculée actuelle de la même fonction de pondération P(t), le gain variable K(t) calculé par le deuxième moyen de calcul (16) étant appliqué à l'entrée de commande de chacun des étages du filtre non linéaire (17).

2. Dispositif de filtrage dynamique non linéaire selon la revendication 1, caractérisé en ce que le premier moyen de calcul (13) du circuit de commande de gain (44) comprend un premier circuit (14) qui reçoit sur ses entrées les signaux $\sum$ et $\varepsilon q$ issus respectivement des bornes (63 et 65) et calcule le poids statistique $\sum^n \cdot (S - |\varepsilon q|)$ du signal d'écart angulaire $\varepsilon$, et un deuxième circuit de calcul (15) qui, à partir dudit poids statistique calculé par le premier circuit (14) et du signal somme $\sum$ issu de la borne (63) calcule la fonction de pondération $P(t) = C \cdot \sum^n \cdot (S - |\varepsilon q|)$ appliquée à l'entrée du deuxième moyen de calcul (16).

3. Dispositif de filtrage dynamique non linéaire selon la revendication 2, caractérisé en ce que le premier circuit de calcul (14) comprend un moyen redresseur (20) qui reçoit le signal $\varepsilon q$ issu de la borne (65) et délivre le signal $|\varepsilon q|$ à un moyen soustracteur (22) recevant également la valeur de seuil prédéterminée S et calculant la différence $S - |\varepsilon q|$, un moyen opérateur (21) qui, alimenté par le signal somme $\sum$ issu de la borne (63) et par le nombre positif prédéterminé n, délivre un signal $\sum^n$, et un moyen multiplicateur (23) qui alimenté par les signaux de sortie des moyens opérateur (21) et soustracteur (22) calcul l'expression $\sum^n \cdot (S - |\varepsilon q|)$ représentant le poids statistique appliqué aux mesures d'écart angulaire $\varepsilon$.

4. Dispositif de filtrage dynamique non-linéaire selon la revendication 2, caractérisé en ce que le deuxième circuit (15) de calcul de la fonction de pondération P(t) comporte
— un moyen de comparaison (20, 24) qui reçoit le signal $\varepsilon q$ délivré par la borne (65), on compare la valeur absolue au seuil prédéterminé S appliqué sur sa deuxième entrée et, si $|\varepsilon q| \geqslant S$, délivre un signal commandant d'une part un premier moyen (26) de mise à zéro du gain K(t) du filtre et d'autre part un moyen de mémorisation (28, 27) du signal $\sum$ reçu de la borne (63), et
— un moyen de comparaison (29) recevant le signal $\sum$ de la borne (63) et le contenu du moyen de mémorisation (28, 27) et délivrant un signal qui commande un second moyen de mise à zéro (30) du gain K(t) du filtre si le signal $\sum$ est inférieur au contenu du moyen de mémorisation (28, 27).

5. Dispositif de filtrage dynamique non linéaire selon la revendication 1, caractérisé en ce que le deuxième moyen de calcul (16) comprend un circuit sommateur (33) recevant sur l'une de ses entrées la fonction P(t) (80) et sur l'autre la sortie d'un circuit d'amplification à gain fixe (31) inférieur à 1, un circuit de retard (32) recevant la sortie du circuit sommateur (33) et connecté à sa sortie à l'amplificateur à gain fixe (31), un circuit diviseur (34) recevant sur ses entrées la fonction P(t) et la sortie du circuit sommateur (33), et dont la sortie délivrant le gain K(t) est directement connectée aux commandes de gain (70, 71) des différents étages du filtre non linéaire (17).

6. Dispositif de filtrage dynamique non linéaire selon la revendication 1, caractérisé en ce que le gain de chaque étage du filtre non linéaire (17) est inférieur à 1.

7. Dispositif de filtrage dynamique non linéaire selon la revendication 6, caractérisé en ce que le gain du n-ième étage est supérieur au gain du (n + 1)-ième étage du filtre non linéaire (17).

8. Dispositif de filtrage dynamique non linéaire selon l'une des revendications 6 ou 7, caractérisé en ce que le n-ième étage du filtre non linéaire a pour gain $[K(t)]^n$, K(t) étant la fonction dépendante du temps représentant le gain du premier étage du filtre.

9. Dispositif radar plus particulièrement utilisé dans les mesures d'écartométrie des cibles mobiles et comportant une antenne (52), son circuit de servomécanisme (49) et le circuit (48) associé évaluant l'angle de dépointage θr de l'antenne, un récepteur (51) qui, à partir du signal reçu par l'antenne, élabore les signaux somme $\sum$, mesure D de la distance de la cible, écartométrie ε et écartométrie en quadrature εq, et un dispositif de filtrage dynamique non linéaire selon l'une quelconque des revendications 1 à 8, caractérisé en ce qu'il comporte en outre :
— un circuit (47) qui effectue l'addition du signal d'écartométrie θ délivré par le récepteur (51) et de l'angle de dépointage Ér évalué par le circuit de commande (48) à partir du signal d'écartométrie ε, et qui délivre un signal représentant l'angle θc = θr + ε d'orientation de la cible par rapport à un repère fixe prédéterminé ; et
— un circuit multiplicateur (46) à l'entrée duquel est appliqué le signal de sortie θc du circuit additionneur (47) et le signal D, mesure de la distance de la cible, issu du récepteur (51) et qui délivre la mesure d = D · θc de l'écart transversal de la cible mobile qui est appliquée à l'entrée du filtre dynamique non linéaire (17) délivrant la mesure filtrée $\hat{d}$ et l'estimée de la vitesse transversale $\hat{v}$, dérivée de la mesure filtrée $\hat{d}$.

10. Dispositif radar plus particulièrement utilisé dans les mesures d'écartométrie des cibles mobiles et comportant pour une version multifréquence, une antenne (52), son circuit de servomécanisme (49) et le circuit (48) associé évaluant l'angle de dépointage θr de l'antenne, un récepteur (51) qui à partir du signal reçu par l'antenne (52) élabore les signaux somme $\sum$, écartométrie ε et écartométrie en quadrature εq et un dispositif de filtrage dynamique non linéaire selon l'une quelconque des revendications 1 à 8, caractérisé en ce qu'il comporte en outre :
— un circuit (47) qui effectue l'addition du signal d'écartométrie ε délivré par le récepteur (51) et de l'angle de dépointage θr évalué par le circuit d'évaluation (48) à partir du signal d'écartométrie ε et délivre un signal, représentant l'angle θc = θr + ε d'orientation de la cible par rapport à un repère fixe prédéterminé, à un premier interrupteur (94) dont la sortie est appliquée à l'entrée d'un premier circuit mémoire (98) ;
— un deuxième interrupteur (95) dont l'entrée est reliée à la sortie du premier moyen (13) de calcul de la fonction de pondération P(t) et dont la sortie est appliquée à l'entrée d'un deuxième circuit mémoire (97), la sortie du deuxième circuit mémoire (97) étant comparée à la fonction de pondération P(t) délivrée par le premier moyen de calcul (13) dans un circuit comparateur (96) qui commande la fermeture des premier et deuxième interrupteurs (94 et 95) ; et
— un troisième et un quatrième interrupteur (99 et 101) dont la fermeture est commandée par un signal (100) délivré par le récepteur (51) à la fin de chaque cycle de fréquence, et qui reçoivent respectivement la sortie des deuxième et premier circuits mémoires (97 et 98), la sortie du troisième interrupteur (99) étant appliquée à l'entrée du deuxième moyen de calcul (16) et la sortie du quatrième interrupteur (101) étant appliquée à l'entrée du premier étage du filtre non-linéaire (17) qui délivre en sortie la mesure filtrée $\hat{\theta}c$ de l'angle d'orientation $\theta_c$ de la cible dans le repère fixe et l'estimée de sa dérivée.

## Claims

1. Dynamic non-linear filter device for angle measurement noise in a radar, particularly a radar used for tracking of movable targets and comprising at least two reception channels originating from electromagnetic detection circuits (51) delivering a sum signal $\sum$ (63) and a signal Eq (65) in quadrature with the deviation angle signal E (64) proper, respectively, generated from the sum $\sum$ and difference $\Delta$ signals supplied by the detection circuits, characterized in that it comprises a non-linear filter (17) having a plurality of stages which are gain controlled by the same control circuit (44) computing the variable gain K(t) from the signals $\sum$ and Eq, and comprising first computing means (13), receiving the signals Eq and $\sum$ from the terminals (65) and (63), respectively, and computing a gain K(t) weighting function P(t) defined by the equation $P(t) = C \cdot \sum^n \cdot (S - |Eq|)$, wherein n is a positive predetermined number, S a predetermined threshold value of the signal Eq and C a coefficient equal to 1 if |Eq| is inferior to the threshold S and if one is in the neighborhood of a local maximum of $\sum$, and equal to 0 in the contrary case, and second computing means (16) receiving said weighting function P(t) and computing the variable gain K(t) as the quotient of the sum of the previously calculated values of the weighting function P(t) to the computed current value of the same weighting function P(t), the variable gain K(t) computed by the second computing means (16) being applied to the control input of each of the stages of the non-linear filter (17).

2. Dynamic non-linear filtering device in accordance with claim 1, characterized in that the first computing means (16) of the gain control circuit (44) comprises a first circuit (14) receiving on its inputs the signals $\sum$ and Eq originating from the terminals (63 and 65, respectively), and computing the statistical weight $\sum^n \cdot (S - |Eq|)$ of the angular deviation signal E, and a second computing circuit (15) computing from said statistical weight computed by the first circuit (14) and from the sum signal $\sum$ originating from the terminal (63) the weighting function $P(t) = C \cdot \sum^n \cdot (S - |Eq|)$ applied to the input of the second computing means (16).

3. Dynamic non-linear filtering device in accordance with claim 2, characterized in that the first computing circuit (14) comprises rectifier means (20) receiving the signal Eq from the terminal (65) and supplying the signal |Eq| to subtracting means (22) further receiving the predetermined threshold value S and computing the difference S − |Eq|, operating means (21) fed by the sum signal $\sum$ from the terminal (63) and the positive predetermined number n and supplying a signal $\sum^n$, and multiplication means (23) fed by the output signals of the operating means (21) and the subtractor (22) and computing the term $\sum^n \cdot (S − |Eq|)$ representing the statistical weight applied to the angular deviation measurement values.

4. Dynamic non-linear filtering device in accordance with claim 2, characterized in that the second computing circuit (15) for computing the weighting function P(t) comprises :

— comparing means (20, 24) receiving the signal Eq supplied by the terminal (65) and comparing the absolute value thereof with the predetermined threshold S applied to its second input and, if $|Eq| \geqslant S$, supplies a signal controlling first zero reset means (26) for zero reset of the gain K(t) of the filter, on the one hand, and storing means (28, 27) for storing the signal $\sum$ received on terminal (63), on the other hand, and

— comparing means (29) receiving the signal $\sum$ from terminal (63) and the content of the storing means (28, 27) and supplying a signal controlling second zero reset means (30) for zero reset of the gain K(t) of the filter, if the signal $\sum$ is inferior to the content of the storing means (28, 27).

5. Dynamic non-linear filtering device in accordance with claim 1, characterized in that the second computing means (16) comprises a summing circuit (33) receiving on one of its inputs the function P(t) (80) and on its other input the output of an amplifier (31) of constant gain which is less than unity, a delay circuit (32) receiving the output of the summing circuit (33) and connected to the constant gain amplifier (31), a divider circuit (34) receiving on its inputs the function P(t) and the output of the summing circuit (33), and having an output supplying the gain K(t) and directly connected to the gain controls (70, 71) of the different stages of the non-linear filter (17).

6. Dynamic non-linear filtering device in accordance with claim 1, characterized in that the gain of each stage of the non-linear filter (17) is less than unity.

7. Dynamic non-linear filtering device in accordance with claim 6, characterized in that the gain of the nth stage exceeds the gain of the (n + 1)th stage of the non-linear filter (17).

8. Dynamic non-linear filtering device in accordance with any of claims 6 and 7, characterized in that the nth stage of the non-linear filter has the gain $[K(t)]^n$, K(t) being a time dependent function representing the gain of the first filter stage.

9. Radar device, more particularly a radar device used for the movable target deviation measurement and comprising an antenna (52) with its servo-mechanism circuit (49) and the associated circuit (48) for determination of the pointing error angle θr of the antenna, a receiver (51) generating the sum signal $\sum$, the target distance measurement signal D, the deviation signal E and the quadrature deviation signal Eq from the signal received from the antenna, and a dynamic non-linear filtering device in accordance with any of claims 1 to 8, characterized in that it further comprises :

— a circuit (47) performing the addition of the deviation signal E supplied by the receiver (51) and of the pointing error angle θr determined by the control circuit (48) from the deviation signal E, and supplying a signal representing the angle θc = θr + E of the target direction with respect to a predetermined stationary mark ; and

— a multiplier circuit (46) the input of which is connected to the output signal θc of the adding circuit (47) and to the signal D, the measured distance of the target, supplied by the receiver (51), and supplying the measurement value d = D · θc of the transverse deviation of the movable target which is applied to the input of the dynamic non-linear filter (17) supplying the filtered measurement signal $\hat{d}$ and the estimation of the transverse speed $\hat{v}$, the derivative of the filter measurement signal $\hat{d}$.

10. Radar device, more particularly a radar device used for the deviation measurement of movable targets and comprising, in a multi-frequency embodiment, an antenna (52) with its servo-mechanism circuit (49) and the associated circuit (48) for determination of the pointing error angle θr of the antenna, a receiver (51) generating the sum signal $\sum$, the deviation signal E and the quadrature deviation signal Eq from the signal received by the antenna (52), and a dynamic non-linear filtering device in accordance with any of claims 1 to 8, characterized in that further comprises :

— a circuit (47) performing the addition of the deviation signal E supplied by the receiver (51) and of the pointing error angle θr determined by the determination circuit (48) from the deviation signal E, and supplying a signal representing the angle c = θr + E of the target direction with respect to a predetermined stationary mark to a first interrupter (94) the output of which is connected to the input of a first memory circuit (98) ;

— a second interrupter (95) the input of which is connected to the output of the first computing means (13) for computing the weighting function P(t), and the output of which is connected to the input of a second memory circuit (97), the output of the second memory circuit (97) being compared with the weighting function P(t) supplied by the first computing means (13) in a comparator circuit (96) controlling the closure of the first and second interrupters (94 and 95) ; and

— third and fourth interrupters (99 and 101) the closure of which is controlled by a signal (100) supplied by the receiver (51) at the end of each frequency cycle, and receiving the output of the second and first memory circuits (97 and 98), respectively, the output of the third interrupter (99) being applied to the input of the second computing means (16) and the output of the fourth interrupter (101) being applied

to the input of the first stage of the non-linear filter (17) the output of which supplies the filtered measurement signal $\hat{\theta}c$ of the target direction angle $\theta c$ within the fixed mark and the estimation of its derivative.

**Ansprüche**

1. Vorrichtung zur dynamischen nichtlinearen Filterung des Winkelmessungsrauschens in einem Radargerät, das insbesondere für die Verfolgung von beweglichen Zielen verwendet wird und wenigstens zwei Empfangswege aufweist, die von elektromagnetischen Detektionskreisen (51) ausgehen, von denen der eine ein Summensignal $\Sigma$ (63) und der andere ein Signal Eq (65) abgibt, das in Quadratur mit dem eigentlichen Winkelablagesignal E (64) ist, das aus dem Summensignal $\Sigma$ und dem Differenzsignal $\Delta$ gewonnen wird, die von den Detektionskreisen abgegeben werden, dadurch gekennzeichnet, daß sie ein nichtlineares Filter (17) mit mehreren Stufen umfaßt, deren Verstärkung durch dieselbe Steuerschaltung (44) gesteuert wird, die aus den Signalen $\Sigma$ und Eq die veränderliche Verstärkung K(t) berechnet und eine erste Recheneinrichtung (13) umfaßt, welche die Signale Eq und $\Sigma$ von den Anschlüssen (65) bzw. (63) empfängt und eine Wichtungsfunktion P(t) für die Verstärkung K(t) berechnet, die durch die Gleichung $P(t) = C \cdot \Sigma^n \cdot (S - |Eq|)$ definiert ist, worin n eine vorbestimmte ganze Zahl, S ein vorbestimmter Schwellwert für das Signal Eq und C ein Koeffizient ist, der gleich 1 ist, wenn $|Eq|$ kleiner als der Schwellwert S ist und wenn man sich im Bereich der Nähe eines lokalen Maximums von $\Sigma$ befindet, und ansonsten gleich 0 ist, und eine zweite Recheneinrichtung (16) umfaßt, welche die genannte Wichtungsfunktion P(t) empfängt und die veränderliche Verstärkung K(t) berechnet als Quotient der Summe der zuvor berechneten Werte der Wichtungsfunktion P(t) durch den aktuellen berechneten Wert derselben Wichtungsfunktion P(t), wobei die durch die zweite Recheneinrichtung (16) berechnete variable Verstärkung K(t) an den Steuereingang einer der Stufen des nichtlinearen Filters (17) angelegt ist.

2. Dynamische nichtlineare Filtervorrichtung nach Anspruch 1, dadurch gekennzeichnet, daß die erste Recheneinrichtung (13) der Verstärkungssteuerschaltung (44) eine erste Schaltung (14) umfaßt, die an ihren Eingängen die Signale $\Sigma$ und Eq empfängt, die von den Anschlüssen (63 bzw. 65) abgegeben werden, und das statistische Gewicht $\Sigma^n \cdot (S - |Eq|)$ des Winkelablagesignals E berechnet, und eine zweite Rechenschaltung (15) umfaßt, die ausgehend von dem durch die erste Schaltung (14) berechneten statistischen Gewicht und dem Summensignal $\Sigma$ von dem Anschluß (63) die Wichtungsfunktion $P(t) = C \cdot \Sigma^n \cdot (S - |Eq|)$ berechnet, die an den Eingang der zweiten Recheneinrichtung (16) angelegt ist.

3. Dynamische nichtlineare Filtervorrichtung nach Anspruch 2, dadurch gekennzeichnet, daß die erste Rechenschaltung (14) eine Gleichrichteranordnung (20) enthält, die das von dem Anschluß (65) abgegebene Signal Eq empfängt und das Signal $|Eq|$ einer Subtrahiereinrichtung (22) zuführt, welche ferner den vorbestimmten Schwellwert S empfängt und die Differenz $S - |Eq|$ berechnet, eine Operatoreinrichtung (21) umfaßt, die von dem am Anschluß (63) abgegebenen Summensignal $\Sigma$ und durch die vorbestimmte positive Zahl n gespeist wird und ein Signal $\Sigma^n$ abgibt, und eine Multipliziereinrichtung (23) umfaßt, welche von den Ausgangssignalen der Operatoreinrichtung (21) und des Subtrahierers (22) gespeist ist und den Ausdruck $\Sigma^n \cdot (S - |Eq|)$ berechnet, der das statistische Gewicht darstellt, welches auf die Winkelablage-Meßwerte E angewendet wird.

4. Dynamische nichtlineare Filtervorrichtung nach Anspruch 2, dadurch gekennzeichnet, daß die zweite Rechenschaltung (15) zur Berechnung der Wichtungsfunktion P(t) umfaßt :
— eine Vergleichereinrichtung (20, 24), die das von dem Anschluß (65) abgegebene Signal Eq empfängt, dessen Absolutwert mit dem an ihren zweiten Eingang angelegten vorbestimmten Schwellwert vergleicht und, wenn $|Eq| \geqslant S$, ein Signal abgibt, welches einerseits eine erste Nullrückstelleinrichtung (26) zur Nullrückstellung der Verstärkung K(t) des Filters und zum anderen eine Speichereinrichtung (28, 27) zur Speicherung des von dem Anschluß (63) empfangenen Signals $\Sigma$ steuert, und
— eine Vergleichereinrichtung (29), die das Signal $\Sigma$ vom Anschluß (63) und den Inhalt der Speichereinrichtung (28, 27) empfängt und ein Signal abgibt, welches eine zweite Nullrückstelleinrichtung (30) zur Nullrückstellung der Verstärkung K(t) des Filters abgibt, wenn das Signal $\Sigma$ kleiner ist als der Inhalt der Speichereinrichtung (28, 27).

5. Dynamische nichtlineare Filtervorrichtung nach Anspruch 1, dadurch gekennzeichnet, daß die zweite Recheneinrichtung (16) eine Summierschaltung (33) umfaßt, die an einem ihrer Eingänge die Funktion P(t) (80) und an ihrem anderen das Ausgangssignal einer Verstärkerschaltung (31) mit fester Verstärkung, die kleiner als 1 ist, empfängt, eine Verzögerungsschaltung (32) umfaßt, die das Ausgangssignal der Summierschaltung (33) empfängt und an ihrem Ausgang mit dem Verstärker (31) fester Verstärkung verbunden ist, und eine Teilerschaltung (34) umfaßt, die an ihren Eingängen die Funktion P(t) und das Ausgangssignal der Summierschaltung (33) empfängt und deren Ausgang, der die Verstärkung K(t) abgibt, direkt an die Verstärkungs-Steuereingänge (70, 71) der verschiedenen Stufen des nichtlinearen Filters (17) angeschlossen ist.

6. Dynamische nichtlineare Filtervorrichtung nach Anspruch 1, dadurch gekennzeichnet, daß die Verstärkung jeder Stufe des nichtlinearen Filters (17) kleiner als 1 ist.

7. Dynamische nichtlineare Filtervorrichtung nach Anspruch 6, dadurch gekennzeichnet, daß die Verstärkung der n-ten Stufe größer als die Verstärkung der (n + 1)-ten Stufe des nichtlinearen Filters (17) ist.

8. Dynamische nichtlineare Filtervorrichtung nach einem der Ansprüche 6 und 7, dadurch gekennzeichnet, daß die n-te Stufe des nichtlinearen Filters die Verstärkung $[K(t)]^n$ aufweist, worin $K(t)$ die zeitabhängige Funktion ist, welche die Verstärkung der ersten Filterstuffe darstellt.

9. Radarvorrichtung, die insbesondere zur Ablagemessung von beweglichen Zielen verwendet wird und eine Antenne (52), deren Servomechanismusschaltung (49) und die zugeordnete Schaltung (48) zur Berechnung des Fehlausrichtungswinkels $\theta r$ der Antenne umfaßt, mit einem Empfänger (51), der aus dem durch die Antenne empfangenen Signal das Summensignal $\sum$, das Meßsignal D für die Entfernung des Ziels, das Ablagesignal E und das Quadratur-Ablagesignal Eq erzeugt, sowie mit einer dynamischen nichtlinearen Filtervorrichtung nach einem der Ansprüche 1 bis 8, dadurch gekennzeichnet, daß sie ferner umfaßt :

— eine Schaltung (47), welche die Addition des Ablagesignals E, das von dem Empfänger (51) abgegeben wird, und des Fehlausrichtungswinkels $\theta r$ durchführt, welches durch die Steuervorrichtung (48) aus dem Ablagesignal E ermittelt wird, und ein Signal abgibt, das den Winkel $\theta c = \theta r + E$ für die Orientierung des Ziels in bezug auf eine vorbestimmte feste Marke darstellt ; und

— eine Multiplizierschaltung (46), an deren Eingang das Ausgangssignal $\theta c$ der Addierschaltung (47) und das Signal D für den Meßwert der Zielentfernung, welches von dem Empfänger (51) abgegeben wird, angelegt sind und die den Meßwert $d = D \cdot \theta c$ für die transversale Ablage des beweglichen Ziels abgibt, welcher an den Eingang des dynamischen nichtlinearen Filters (17) angelegt ist, das den gefilterten Meßwert $\hat{d}$ und den Schätzwert der transversalen Geschwindigkeit $\hat{v}$ abgibt, der die Ableitung des gefilterten Meßwertes $\hat{d}$ ist.

10. Radarvorrichtung, die insbesondere für die Ablagemessung von beweglichen Zielen verwendet wird und für eine Multifrequenzausführung eine Antenne (52), ihre Servomechanismusschaltung (49) und die zugeordnete Schaltung (48) umfaßt, welche den Fehlausrichtungswinkel $\theta r$ der Antenne ermittelt, mit einem Empfänger (51), der aus dem durch die Antenne (52) empfangenen Signal das Summensignal $\sum$, das Ablagesignal E und das Quadraturablagesignal Eq erzeugt, und mit einer dynamischen nichtlinearen Filtervorrichtung nach einem der Ansprüche 1 bis 8, dadurch gekennzeichnet, daß sie ferner umfaßt :

— eine Schaltung (47), welche die Addition des von dem Empfänger (51) abgegebenen Ablagesignals E und des durch die Ermittlungsschaltung (48) aus dem Ablagesignal E ermittelten Fehlausrichtungswinkels $\theta r$ durchführt und ein Signal abgibt, das den Winkel $\theta c = \theta r + E$ für die Orientierung des Ziels in bezug auf eine vorbestimmte feste Marke darstellt und an einen ersten Unterbrecher (94) angelegt ist, dessen Ausgang mit dem Eingang einer ersten Speicherschaltung (98) verbunden ist ;

— einen zweiten Unterbrecher (95), dessen Eingang mit dem Ausgang der ersten Recheneinrichtung (13) zur Berechnung der Wichtungsfunktion P(t) verbunden ist und deren Ausgang mit dem Eingang einer zweiten Speicherschaltung (97) verbunden ist, wobei das Ausgangssignal der zweiten Speicherschaltung (97) mit der von der ersten Recheneinrichtung (13) abgegebenen Wichtungsfunktion P(t) in einer Vergleicherschaltung (96) verglichen wird, welche das Schließen des ersten und des zweiten Unterbrechers (94 und 95) steuert ; und

— einen dritten sowie einen vierten Unterbrecher (99 und 101), deren Schließen durch ein Signal (100) gesteuert wird, das von dem Empfänger (51) am Ende jedes Frequenzzyklus abgegeben wird, und die das Ausgangssignal der zweiten bzw. der ersten Speicherschaltung (97 und 98) empfangen, wobei das Ausgangssignal des dritten Unterbrechers (99) an den Eingang der zweiten Recheneinrichtung (16) angelegt ist und das Ausgangssignal des vierten Unterbrechers (101) an den Eingang der ersten Stufe des nichtlinearen Filters (17) angelegt ist, dessen Ausgang den gefilterten Meßwert $\hat{\theta}c$ für den Orientierungswinkel $\theta c$ des Ziels in der feststehenden Marke und den Schätzwert seiner Ableitung abgibt.

FIG_1

FIG.2

FIG.3

FIG_4

FIG_5

FIG_6

FIG_7

CIRCUIT DE COMMANDE DE GAIN — 44

premier moyen de calcul — 13  $P(t)$

deuxième moyen de calcul — 16  $K(t)$

FILTRE NON LINEAIRE — 17

1er étage — 18
2e étage — 19

$\hat{d}$  $\hat{v}$  D'

UNITE DE CALCUL — 45

circuit de commande — 48

servo-mécanisme — 49  $\theta r$

antenne — 52  $\theta c$

récepteur — 51

$\varepsilon$ — 64
$\varepsilon q$ — 65
$\Sigma$ — 63
D — 93

$+$  $+$ — 47  $\theta c$

X — 46  $d$

E

FIG_8